# EUROPÄISCHE PATENTSCHRIFT

(11) **EP 0 686 586 B1**
(45) Veröffentlichungstag und Bekanntmachung des Hinweises auf die Patenterteilung: **28.10.1998**
(21) Anmeldenummer: 95810360.8
(22) Anmeldetag: 31.05.1995
(51) Int. Cl.: B65G 47/96

(54) **Betätigungsvorrichtung zum Kippen eines Bauteils**
Actuating device for tilting a construction element
Dispositif d'actionnement pour basculer un élément de construction

(30) Priorität: 08.06.1994 CH 1798/94
(43) Veröffentlichungstag der Anmeldung: 13.12.1995
(73) Patentinhaber: GRAPHA-HOLDING AG, 6052 Hergiswil (CH)
(72) Erfinder: Boller, Manfred, D-79801 Hohentengen (DE)

(56) Entgegenhaltungen:
- EP-A- 0 540 464
- WO-A-93/07972

## Beschreibung

Aus der EP - A - 540 464 ist eine Sortieranlage für Stückgüter bekannt mit einer Vielzahl zu einer Wagenkette zusammengekuppelter Wagen. Jeder Wagen hat eine Schale zur Aufnahme der Stückgüter. Die Schale kann aus einer verriegelten, horizontalen Grundstellung bei einer wählbaren Empfangsstation mittels einer von zwei Stossstangen und einer Betätigungsvorrichtung in eine Kippstellung verschwenkt werden. Bei Betätigung der Stossstange wird zunächst die Verriegelung gelöst und anschliessend die Schale gekippt. Diese Betätigungsvorrichtung hat sich sehr bewährt. Allerdings ist sie wegen der vielen erforderlichen Einzelteile aufwendig in der Herstellung.

Der vorliegenden Erfindung liegt die Aufgabe zugrunde, eine Vorrichtung der eingangs genannten Art derart auszubilden, dass sie preiswert herstellbar ist. Diese Aufgabe wird durch die Merkmalskombination des Anspruchs 1 gelöst.

Nachfolgend wird ein Ausführungsbeispiel der Erfindung anhand der Zeichnungen erläutert. Darin zeigt:
- Fig. 1: eine Seitenansicht eines Wagens für eine Sortieranlage,
- Fig. 2: einen Querschnitt längs der Linie II - II in Figur 1,

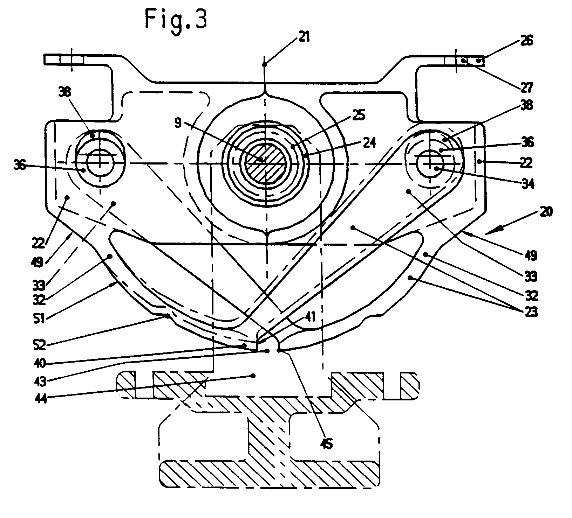

- Fig. 3: eine schematische Darstellung der Funktionsweise,

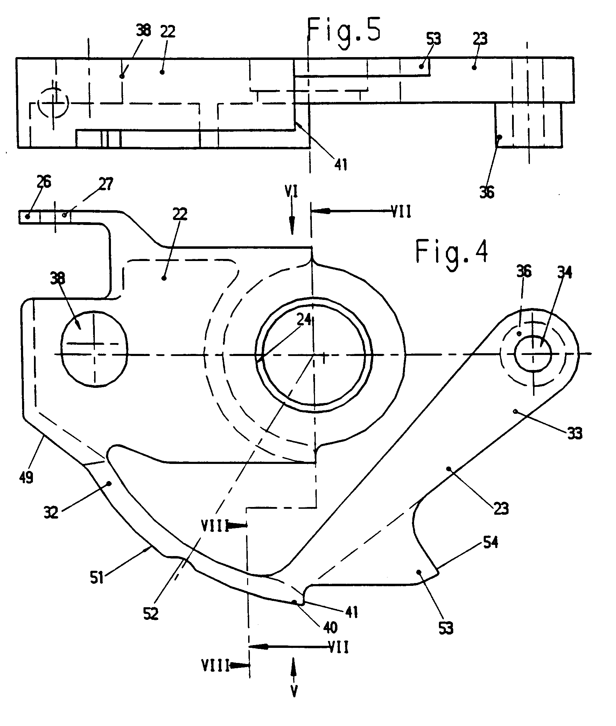

- Fig. 4: eine Ansicht eines Trägers mit Bügel, und

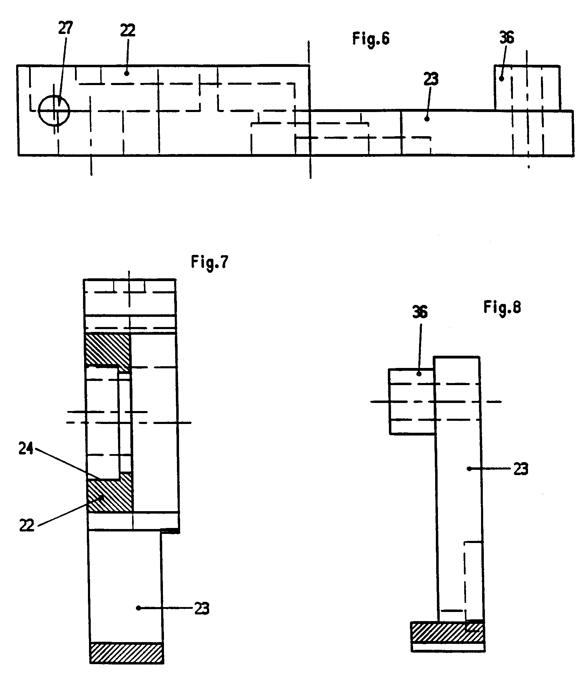

- Fig. 5-8: Ansichten und Schnitte in Richtung der Pfeile V, VI bzw. längs der Linien VII - VII und VIII - VIII in Figur 4.

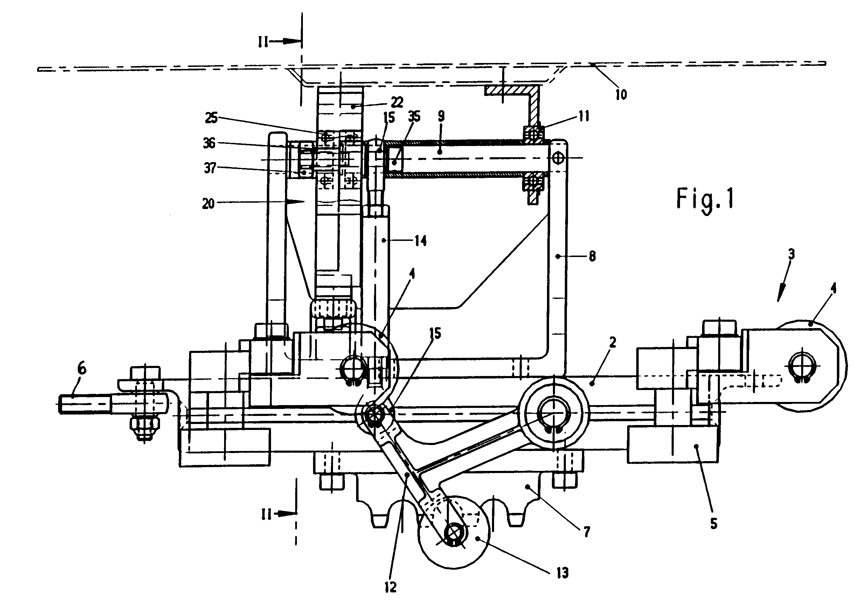

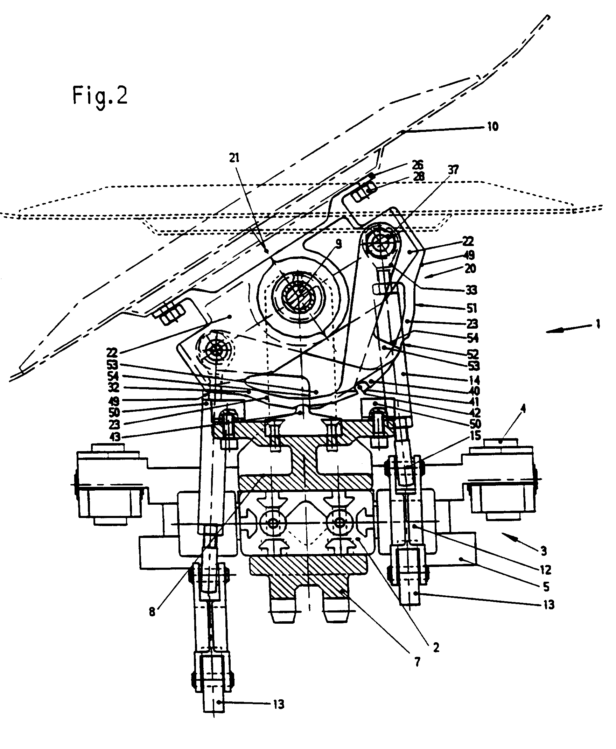

In Figur 1 und 2 ist ein Wagen 1 einer Sortieranlage dargestellt. An einem Wagenkörper 2 ist ein Laufwerk 3 mit Laufrollen 4 und Seitenführungsrollen 5 montiert, die auf nicht dargestellten Schienen laufen. Benachbarte Wagen 1 sind über Gelenkstangen 6 miteinander gekoppelt. Der Wagenkörper 2 hat unten eine Zahnstange 7 zum Eingriff in eine umlaufende Kette zum Antrieb der Wagenkette. Auf dem Wagenkörper 2 ist ein U-förmiger Träger 8 montiert, der eine in Wagenlängsrichtung verlaufende Achse 9 trägt. Auf dieser ist eine Schale 10 zur Auflage der Stückgüter mittels Kugellagern 11 schwenkbar gelagert. Seitlich am Wagenkörper 2 ist je ein Schwenkarm 12 gelagert. An diesem ist unten eine Betätigungsrolle 13 drehbar gelagert, welche in der Zielstation des Wagens 1 auf eine schaltbare Kurve aufläuft und eine Stossstange 14 nach oben schiebt. Die Stossstange 14 hat beidseits sphärische Lager 15.

Die beiden Stossstangen 14 wirken auf eine Verriegelungs- und Betätigungsvorrichtung 20. Diese besteht aus zwei identischen, zentralsymmetrisch zu einer Hochachse 21 durch die Achse 9 angeordneten Trägern 22 mit angeformten, federelastischen Bügeln 23 aus Kunststoff, vorzugsweise aus Polypropylen. Die beiden Träger 22 und Bügel 23 sind teilweise axial gegeneinander versetzt. Die Träger 22 haben mittig koaxiale Bohrungen 24, in welche Kugellager 25 eingesetzt sind. Die Lager 25 sind auf die Welle 9 aufgeschoben. Die Träger 22 haben oben seitlich abstehende Flansche 26 mit Durchgangsbohrungen 27. Mittels durch die Bohrungen 27 gesteckten Schrauben 28 ist die Schale 10 mit den Trägern 22 verschraubt.

An jedem Träger ist der Bügel 23 an der einen Seite mit seinem ersten Ende 32 angeformt. Am gegenüberliegenden zweiten Ende 33 hat der Bügel 23 eine zylindrische Druchgangsbohrung 34, welche sich durch einen zylindrischen Vorsprung 36 erstreckt und durch welche ein das obere Lager 15 der Stossstange 14 tragender Gewindebolzen 35 durchgesteckt und mit einer Mutter 37 befestigt ist. Der Vorsprung 36 durchgreift ein sich in Höhenrichtung erstreckendes Langloch 38 im andern Träger 22. In der Grundstellung des Bügels 23 liegt der Vorsprung 36 am unteren Rand des Langlochs 38 an, z.B. mit leichter Vorspannung.

Jeder Bügel 23 hat unten einen Rastnocken 40 mit einer in der Grundstellung vertikalen Anschlagfläche 41. Die Anschlagflächen 41 der beiden Bügel 23 bilden zusammen eine Nut 42, welche in der Grundstellung einen Vorsprung 43 umgreift. Der Vorsprung 43 ist an einem Kunststoff-Körper 44 angeformt, der auf dem Träger 8 aufgeschraubt ist. Der Vorsprung 43 ist zylindrisch oder prismatisch und hat beidseits vertikale Anschlagflächen 45, gegen welche die Flächen 41 in der Grundstellung anliegen und die Schale 10 in der horizontalen Lage verriegeln.

Läuft eine der Rollen 13 auf einer Kurve auf, stösst die betreffende Stossstange 14 das betreffende Bügelende 33 gegen die Federkraft des Bügels 23 nach oben, bis der Vorsprung 36 am oberen Rand des Langlochs 38 anschlägt. Dabei federt der Bügel 23 im wesentlichen benachbart seinem ersten Ende 32, sodass der Nocken 40 über den Vorsprung 43 angehoben wird. Dadurch ist die Verriegelung gelöst und beim weiteren Hochschieben der Stange 14 wird die Schale 10 in ihre Endlage gekippt. In dieser Endlage schlägt eine ebene Fläche 49 benachbart dem Bügelende 32 an einem Gummipuffer 50 an, sodass die Kippbewegung sanft und geräuscharm gebremst wird.

Die Aussenflächen 51 des Bügels 23 zwischen der Anschlagfläche 41 und dem ersten Ende 32 ist bogenförmig und kann eine Rastkerbe 52 zum Einrasten des Bügels 23 im Vorsprung 43 in der Kippstellung enthalten. Damit ist die Kippstellung gesichert. Zusätzlich oder stattdessen kann der Bügel 23 auf der Seite zwischen der Anschlagfläche 41 und dem zweiten Ende 33 einen Vorsprung 53 mit einer Anschlagfläche 54 haben, welche annähernd in einer die Achse 9 enthaltenden Ebene liegt und in dieselbe Richtung weist wie die Fläche 41. Der Vorsprung 53 des nicht betätigten Bügels 23 rastet in diesem Falle in der Kippstellung hinter dem Vorsprung 43 ein, sodass die Schale 10 in der Kippstellung verriegelt ist.

Zur Rückstellung der Schale 10 in die Grunstellung läuft die abgesenkte Betätigungsrolle 13 auf eine z.B. feststehende Kurve auf. Der betreffende Bügel 23 federt wiederum ein, sodass der Vorsprung 53 über den Vorsprung 43 angehoben, also die Verriegelung gelöst wird und beim weiteren Anheben der Rolle 13 die Schale 10 in ihre Grundstellung zurückgeführt wird, wo die beiden Rastnocken 40 am Vorsprung 43 einrasten und die Schale 10 verriegeln.

Die Rastkerbe 52 und der Vorsprung 53 können jedoch auch weggelassen und die Aussenfläche 51 so ausgebildet werden, dass der Teil des Bügels 23 zwischen dem Rastnocken 40 und dem ersten Ende 32 beim Kippen der Schale 10 progessiv einfedert. Die Schale 10 kann in diesem Falle aus der Kippstellung selbsttätig in die Grundstellung zurückschwenken, sobald die betreffende Betätigungsrolle 13 von der betreffenden Kurve wegläuft.

Der Bereich der progressiven Einfederung kann jedoch auf den Rastnocken 40 in unmittelbarer Nachbarschaft der Anschlagfläche 41 beschränkt sein, sodass die selbsttätige Rückschwenkung in die verriegelte Grundstellung auf einen Winkelbereich von z.B. 2° bis 10° beschränkt ist. Die Aussenfläche 51 ist dann benachbart der Fläche 41 leicht spiralförmig, wobei der Abstand von der Drehachse mit zunehmendem Abstand von der Fläche 41 zunimmt.

Falls die Schalen 10 nur auf die eine Seite gekippt werden müssen, also alle Zielstationen auf derselben Seiten der Wagenkette angeordnet sind, kann die Vorrichtung entsprechend vereinfacht werden, indem nur ein Träger 22 mit Bügel 23 eingebaut wird und der zweite Anschlag 41 fest an diesem Träger 22 angeformt ist.

## Patentansprüche

1. Betätigungsvorrichtung zum Kippen eines Bauteils (10), insbesondere einer Schale eines Wagens (1) einer Sortieranlage, aus einer verriegelten Grundstellung in mindestens eine Kippstellung, wobei das Bauteil (10) um eine Achse (9) schwenkbar gelagert ist und wobei zum Kippen des Bauteils (10) mindestens eine Betätigungsstange (14) eine Verriegelungseinrichtung (40, 43) entriegelt und das Bauteil (10) kippt, dadurch gekennzeichnet, dass die Betätigungsvorrichtung mindestens einen an seinem ersten Ende (32) am Bauteil (10) befestigten, federnden Bügel (23) umfasst, der an seinem zweiten Ende (33) gegenüber dem Bauteil (10) begrenzt bewegbar gehalten ist, dass benachbart dem zweiten Ende (33) an diesem die Betätigungsstange (14) angelenkt ist und dass der Bügel (23) zwischen den beiden Enden (32, 33) einen Rastnocken (40) aufweist, der in der Grundstellung des Bauteils (10) mit einer Anschlagfläche (45) hinter einem gestellfesten Vorsprung (43) einrastet, wobei beim Kippen des Bauteils (10) die Betätigungsstange (14) zunächst gegen den Bügel (23) gestoßen wird, der dabei federnd nachgibt, sodaß der Rastnocken (40) aus dem Vorsprung (43) ausrastet, und das Bauteil (10) durch weiteres Betätigen der Betätigungsstange (14) gekippt wird.

2. Vorrichtung nach Anspruch 1, wobei zwei Bügel (23) achsialsymmetrisch zu einer Hochachse (21) angeordnet sind, die je einen Nocken (40) aufweisen, wobei die beiden Nocken (40) eine Nut (50) bilden, in welche in der Grundstellung der Vorsprung (43) eingerastet ist.

3. Vorrichtung nach Anspruch 1 oder 2, wobei der bzw. die Bügel (23) und/oder der Vorsprung (43) aus Kunststoff, insbesondere aus Polypropylen besteht bzw. bestehen.

4. Vorrichtung nach einem der Ansprüche 1 bis 3, wobei jeder Bügel (23) an einem Träger (22) angeformt ist, an welchem das Bauteil (10) befestigt ist, und welcher auf der Achse (9) drehbar gelagert ist.

5. Vorrichtung nach den Ansprüchen 2 und 4, wobei jeder Träger (22) auf der einen Seite der Achse (9) beabstandet von dieser ein annähernd in Längsrichtung der Betätigungsstange (14) verlaufendes Langloch (38) aufweist, durch welches ein Lagerzapfen (36) des andern Bügels (23) durchgreift.

6. Vorrichtung nach einem der Ansprüche 1 bis 5, wobei jeder Bügel (23) zwischen seinem ersten Ende (32) und dem Rastnocken (40) bogenförmig ausgebildet ist.

7. Vorrichtung nach Anspruch 6, wobei jeder Bügel (23) zusätzlich eine Rastausnehmung (52) aufweist, die in der Kippstellung im Vorsprung (43) einrastet.

8. Vorrichtung nach einem der Ansprüche 1 bis 7, wobei jeder Bügel (23) zwischen dem ersten Ende (32) und dem Rastnocken (40) zumindest im Bereich des Rastnockens derart ausgebildet ist, dass er beim Verschwenken des Bauteils (10) aus der Grundstellung einfedert, sodass das Bauteil (10) bei unbelasteter Betätigungsstange (14) zumnindest bei kleinen Auslenkwinkeln unter 10° selbsttätig in die Grundstellung zurückschwenkt.

9. Vorrichtung nach einem der Ansprüche 1 bis 7, wobei jeder Bügel (23) zusätzlich einen Anschlag (54) aufweist, welcher in der Kippstellung hinter dem Vorsprung (43) einrastet und das Bauteil (10) verriegelt.

10. Vorrichtung nach einem der Ansprüche 1 bis 9, wobei die Betätigungsstange (14) mit einem Schwenkhebel (12) gelenkig verbunden ist, der eine Betätigungsrolle (13) trägt.

## Claims

1. Actuating device for tipping a component (10), especially a tray of a trolley (1) of a sorting installation, from a locked normal position into at least one tipping position, wherein the component (10) is mounted for swivelling about a shaft (9), and wherein, for tipping the component (10), at least one actuating bar (14) unlocks a locking arrangement (40, 43) and tips the component (10), characterised in that the actuating device includes at least one resilient bracket (23) which is secured at its first end (32) to the component (10) and which at its second end (33) is held to be displaceable to a limited extent with respect to the component (10); in that adjacent the second end (33) the actuating bar (14) is articulated thereto; and in that the bracket (23) has a latching cam (40) between the two ends (32, 33) which in the normal position of the component (10) latches by way of an abutment surface (45) behind a projection (43) that is fast with the frame, the actuating bar (14), upon tipping of the component (10), initially being pressed against the bracket (23) which thereupon yields resiliently so that the latching cam (40) is unlatched from the projection (43), and the component (10) being tipped upon further actuation of the actuating bar (14).

2. Device according to claim 1, wherein two brackets (23) are arranged axially symmetrical with respect to a normal axis (21), they each having a cam (40), the two cams (40) forming a groove (50) into which the projection (43) latches when in the normal position.

3. Device according to claim 1 or 2, wherein the bracket or brackets (23) and/or the projection (43) is or are made of plastics, especially polypropylene.

4. Device according to one of claims 1 to 3, wherein each bracket (23) is formed onto a support (22) to which the component (10) is secured and which is rotatably mounted on the shaft (9).

5. Device according to claims 2 and 4, wherein each support (22) has an elongated hole (38) disposed to one side of the shaft (9) and spaced from the latter and extending in about the longitudinal direction of the actuating bar (14), a bearing pin (36) of the other bracket (23) extending through that elongated hole (38).

6. Device according to one of claims 1 to 5, wherein each bracket (23) is of arcuately shaped construction between its first end (32) and the latching cam (40).

7. Device according to claim 6, wherein each bracket (23) additionally has a latching recess (52) which in the tipping position latches with the projection (43).

8. Device according to one of claims 1 to 7, wherein each bracket (23), between the first end (32) and the latching cam (40), at least in the region of the latching cam, is so constructed that it flexes upon swivelling of the component (10) from its normal position, so that when the actuating bar (14) is not acted upon, the component (10) swivels back automatically to its normal position, at least in the case of divergence angles of less than 10°.

9. Device according to one of claims 1 to 7, wherein each bracket (23) additionally has an abutment (54) which, in the tipping position, latches behind the projection (43) and locks the component (10).

10. Device according to one of claims 1 to 9, wherein the actuating bar (14) is articulatedly connected to a swivel lever (12) which carries an actuating roller (13).

## Revendications

1. Dispositif d'actionnement pour faire basculer un élément de construction (10), notamment la coupe d'un chariot (1) d'une installation de triage, à partir d'une position de départ verrouillée au moins dans une position basculée, sachant que l'élément de construction (10) est monté de façon à pivoter autour d'un axe (9) et que, pour faire basculer l'élément de construction (10), au moins une barre d'actionnement (14) déverrouille un dispositif de verrouillage (40, 43) et fait basculer l'élément de construction (10), caractérisé en ce que le dispositif d'actionnement comprend au moins un étrier (23) faisant ressort qui est fixé par sa première extrémité (32) à l'élément de construction (10) et qui est maintenu par sa seconde extrémité (33) de façon à présenter une mobilité limitée par rapport à l'élément de construction (10), en ce qu'à proximité de la seconde extrémité (33) est fixée de façon articulée la barre d'actionnement (14), et en ce que l'étrier (23) présente entre les deux extrémités (32, 33) un mentonnet (40) qui, lorsque l'élément de construction (10) est dans la position de départ, s'enclenche avec une surface de butée (45) derrière une saillie (43) fixe du bâti, sachant que, lorsque l'élément de construction (10) bascule, la barre d'actionnement (14) est poussée tout d'abord vers l'étrier (23) qui cède avec ressort, si bien que le mentonnet (40) se déclenche de la saillie (43), et que l'élément de construction (10) bascule lorsque l'on actionne la barre d'actionnement (14) plus avant.

2. Dispositif selon la revendication 1, selon lequel deux étriers (23) présentant chacun un mentonnet (40) sont disposés de façon symétrique par rapport à un axe vertical (21), sachant que les deux mentonnets (40) forment une rainure (50) dans laquelle la saillie (43) est enclenchée dans la position de départ.

3. Dispositif selon la revendication 1 ou 2, selon lequel l'étrier ou les étriers (23) et/ou la saillie (43) est ou sont composé(s) de matière plastique, notamment de polypropylène.

4. Dispositif selon l'une des revendications 1 à 3, selon lequel chaque étrier (23) est ménagé sur un support (22) auquel est fixé l'élément de construction (10) et qui est monté de façon à tourner autour de l'axe (9).

5. Dispositif selon les revendications 2 et 4, selon lequel chaque support (22) présente d'un côté de l'axe (9), à distance de celui-ci, un trou oblong (38) s'étendant approximativement dans la direction longitudinale du levier d'actionnement (14), que traverse un tourillon (36) de l'autre étrier (23).

6. Dispositif selon l'une des revendications 1 à 5, selon lequel chaque étrier (23) est réalisé en forme d'arc de cercle entre sa première extrémité (32) et le mentonnet (40).

7. Dispositif selon la revendication 6, selon lequel chaque étrier (23) présente en outre un évidement d'enclenchement (52) dans lequel s'enclenche la saillie (43) dans la position basculée.

8. Dispositif selon l'une des revendications 1 à 7, selon lequel chaque étrier (23) est réalisé entre la première extrémité (32) et le mentonnet (40), tout au moins dans la zone du mentonnet, de manière à ce qu'il fasse ressort lorsque l'élément de construction (10) pivote à partir de la position de départ, de sorte que, lorsque la barre d'actionnement (14) n'est pas sollicitée, notamment dans le cas où l'angle de déviation est inférieur à 10°, l'élément de construction (10) revient automatiquement à la position de départ.

9. Dispositif selon l'une des revendications 1 à 7, selon lequel chaque étrier (23) présente en outre une butée (54) qui s'enclenche derrière la saillie (43) en position basculée et verrouille l'élément de construction (10).

10. Dispositif selon l'une des revendications 1 à 9, selon lequel la barre d'actionnement (14) est reliée de façon articulée à un levier pivotant (12) qui porte un galet d'actionnement (13).
